# EUROPEAN PATENT SPECIFICATION

(11) **EP 3 791 152 B1**
(45) Date of publication and mention of the grant of the patent: **07.06.2023**
(21) Application number: 19715947.8
(22) Date of filing: 11.04.2019
(51) Int. Cl.: G01N 1/28, G01N 3/02

(54) **DEVICE FOR PREPARING SHEET SPECIMENS**
VORRICHTUNG ZUR HERSTELLUNG VON BLATTPROBEN
DISPOSITIF DE PRÉPARATION D'ÉCHANTILLONS DE FEUILLES

(30) Priority: 10.05.2018 EP 18382321
(43) Date of publication of application: 17.03.2021
(73) Proprietor: Fundació Eurecat, 08290 Cerdanyola del Vallès (Barcelona) (ES)
(72) Inventor: LARA PÉREZ, Antoni, 08263 Castelltallat (Barcelona) (ES); FRÓMETA GUTIÉRREZ, David, 08840 Viladecans (Barcelona) (ES); PARAREDA ORIOL, Sergi, 08500 Vic (Barcelona) (ES); CASELLAS PADRÓ, Daniel, 08242 Manresa (Barcelona) (ES)
(74) Representative: Herrero & Asociados, S.L.
(86) International application number: PCT/EP2019/059262
(87) International publication number: WO 2019/214896

(56) References cited:
- WO-A1-2014/113432
- CN-A- 101 387 590
- US-A- 5 319 983

## Description

The present invention refers to a device for preparing sheet specimens to perform laboratory test for mechanical characterizations.

### Background of the invention

For several applications, it is necessary to obtain the mechanical properties of sheet materials before its use. The performed tests allow selecting materials for given applications, check the properties for current industrial use or determine properties for material improvements, among others.

In practice, some of these tests require the introduction of cracks in the specimens to measure the material resistance to crack propagation under different loads and environments.

With the devices currently known for preparing sheet specimens, cracks are usually introduced by applying cyclic loads. These pre-cracking fatigue tests are costly and time consuming.

This kind of known devices for preparing sheet specimens has the drawback that the preparation is expensive because of its duration and use of costly laboratory equipment.

CN101387590A discloses a specimen notch presser, comprising a base, a support board, a support sleeve, a press knife, a press rod, a pressure plate and a return spring, wherein the support plate is fixed on the base.

US5319983A discloses notching methods and machines for preparing notches in mechanical testing specimens. The notching machines razor element for creating a notch in the specimen and mechanical actuation elements for substantially linearly contacting the razor element with the specimen in a direction which is either substantially normal to the surface of the specimen receiving the notch or substantially normal to a stress created in the specimen during testing.

WO2014113432A1 discloses a structural shape memory assisted self-healing polymer formed by laminating thin layers of an ionomer, such as a member of the poly(styrene sulfonate) (PSS) family of ionomers, with a WEGP-type SMP, such as atactic poly(styrene) (PS) with molecular weight in the 200 kDa range (or alternatively poly(methyl methacrylate) (PMMA)) in combination with polycyclooctene (PCO).

Therefore, one purpose of the present invention is to provide a device for introducing cracks in sheet specimens in which the preparation only takes a reduced time, with the consequent saving of costs. The obtained cracked specimen closely reproduces the behavior of specimen with fatigue pre-cracks or other type of cracks.

### Description of the invention

With the device according to the present invention it is possible to solve said drawbacks, providing other advantages that are described below.

The device for preparing sheet specimens according to the present invention is defined by the appended set of claims. The device comprises a base for placing on it a sheet specimen and a cutting punch to produce sheared cracks or sharp notches, such as sharp notches with a radius similar to a crack, at the end of the cut area in said sheet specimen.

Thanks to this feature, the cracks can be formed cutting directly the sheet, and not by cyclic loading, so that the preparation of the sheet specimen takes a reduced time in comparison with the conventional devices.

According to a preferred embodiment, said cutting punch comprises a beveled lower end. Furthermore, said cutting punch also comprises a central vertical groove and two cutting portions divided by said central vertical groove, each cutting portion defining an obtuse angle with respect to the vertical axis of the cutting punch.

This configuration of the cutting punch permits to make cracks that are suitable for the subsequent tests to be carried out on the specimen.

Advantageously, the base comprises centering means for centering said sheet specimen to ensure a correct position of the sheet specimen on the base.

According to a preferred embodiment, said centering means comprise a plurality of holes inside which pins protruding from the base are housed.

Preferably, the device for preparing sheet specimens according to the present invention also comprises a press-holder element for pressing the sheet specimen against the base during the cutting of the sheet specimen for holding it.

Said pressing element can be preferably placed in said central vertical groove of the cutting punch. However, said pressing element can be placed in any suitable position of pressing and holding the sheet specimen. Said cutting punch and said pressing element are preferably mounted on a pressing frame.

### Brief description of the drawings

For a better understanding the above explanation and for the sole purpose of providing an example, some non-limiting drawings are included that schematically depict a practical embodiment.
Figure 1 is a perspective view of the device for preparing sheet specimens according to the present invention;
Figure 2 is a cross-sectional view of the device for preparing sheet specimens according to the present invention;
Figure 3 is a frontal elevation view of the cutting punch of the device for preparing sheet specimens according to the present invention;
Figure 4 is a side cross-section elevation view of the cutting punch of the device for preparing sheet specimens according to the present invention; and
Figure 5 is an elevation view of a detail of the contact zone between the cutting punch and the sheet specimen in the device for preparing sheet specimens according to the present invention.

### Description of a preferred embodiment

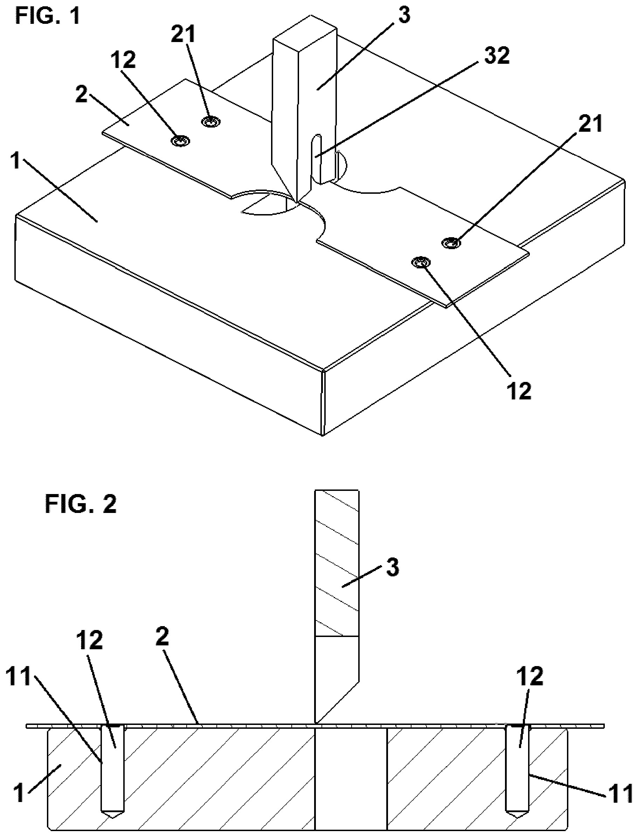

The device for preparing sheet specimens according to the present invention can be seen in Figure 1 in a perspective view.

The device according to the present invention comprises a base 1 on which a sheet specimen 2 is placed and a cutting punch 3, which makes little cracks on the sheet specimen 2, as will be explained hereinafter. The sheet specimen 2 is conventional (it can be made e.g. from steel) and its shape can be seen in this Figure 1. Preferably, the sheet specimen 2 has a rectangular shape with curved notches provided in opposite sides of the larger sides of the rectangle, e.g. in a centered position. This way, the little cracks will be made in the zone between these curved notches.

For granting the correct positioning of the sheet specimen 2 on the base 1, and therefore the correct positioning of the little cracks, the base 1 comprises centering means, which can be seen in more detail in Figure 2.

These centering means comprise a plurality of holes 11 placed in the base 1 inside which pins 12 are housed. These pins 12 protruding slightly from the base 1, so that these pins 12 are also housed inside corresponding through holes 21 of the sheet specimens 2.

These centering means permit a very simple and accurate positioning of the sheet specimen 2 in the desired position on the base 1.

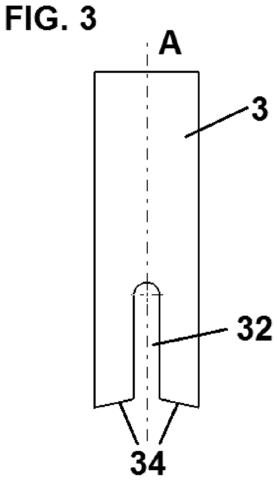

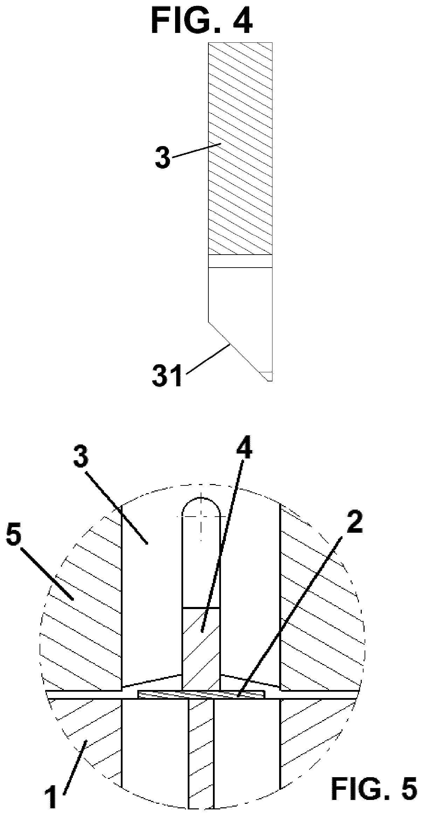

The configuration of the cutting punch 3 can be seen more clearly from Figures 3 and 4.

The cutting punch 3 comprises a beveled lower end, e.g. having a beveled portion defining an angle of about 45° with respect to the vertical axis A of the cutting punch 3.

The cutting punch 3 also comprises a central vertical groove 32. This central vertical groove 32 divides the lower end of the cutting punch 3 in two cutting portions 34, which are symmetrical with respect the vertical axis A of the cutting punch and define an obtuse angle with said vertical axis A. The obtuse angle can range, e.g. between 100° and 120°, but can be any obtuse angle that permits a correct cutting of the little cracks in the sheet specimen 2.

The device for preparing sheet specimens according to the present invention also comprises a pressing element 4 (shown in Figure 5) for holding and pressing the sheet specimen 2 against the base 1.

This pressing element 4, and preferably also the cutting punch 3, is mounted on a pressing frame 5, which is not shown in detail, and whose function is just lowering and raising the pressing element 4 and the cutting punch 3, as described hereinafter.

The operation of the device for preparing sheet specimens according to the present invention is very simple. Firstly, the sheet specimen 2 is placed on the base 1 in the correct position. To this end, the pins 12 are used, so that the pins 12 are housed inside the through holes 21 of the sheet specimen 2.

Once the sheet specimen 2 is positioned in its correct position, the pressing element 4 and the cutting punch 3 are lowered by conventional means, so that little sheared cracks are cut in the zone between the notches of the sheet specimen 2.

After that, the sheet specimen 2 can be removed from the base 1 and used for mechanical testing purposes.

## Claims

1. Device for preparing sheet specimens, comprising a base (1) for placing on it a sheet specimen (2) and a cutting punch (3) for cutting sheared cracks or sharp notches in said sheet specimen (2), **characterized in that**
said cutting punch (3) comprises a central vertical groove (32) positioned along a longitudinal axis (A) of the cutting punch, wherein said cutting punch (3) comprises two cutting portions (34) divided by said central vertical groove (32), each cutting portion (34) defining an obtuse angle with respect to the longitudinal axis (A) of the cutting punch (3).

2. Device for preparing sheet specimens according to claim 1, wherein said cutting punch (3) comprises a beveled lower end (31).

3. Device for preparing sheet specimens according to claim 1, wherein the base (1) comprises centering means (11, 12) for centering said sheet specimen (2).

4. Device for preparing sheet specimens according to claim 3, wherein said centering means comprises a plurality of holes (11) inside which pins (12) protruding from the base (1) are housed.

5. Device for preparing sheet specimens according to claim 1, wherein the device also comprises a pressing element (4) for pressing the sheet specimen (2) against the base (1).

6. Device for preparing sheet specimens according to claims 5, wherein said pressing element (4) is placed in said central vertical groove (32) of the cutting punch (3).

7. Device for preparing sheet specimens according to claim 1, wherein said cutting punch (3) is mounted on a pressing frame (5).

8. Device for preparing sheet specimens according to claim 7, wherein the device further comprises a pressing element (4) for pressing the sheet specimen (2) against the base (1) and wherein said pressing element (4) is also mounted on said pressing frame (5).

## Patentansprüche

1. Vorrichtung zum Erstellen von Blattproben,
mit einem Unterteil (1) zum Darauflegen einer Blattprobe (2) und einen Schneidstempel (3) zum Schneiden von Scherrissen oder scharfen Kerben in die Blattprobe (2),
**dadurch gekennzeichnet,**
**dass** der Schneidstempel (3) eine zentrale vertikale Rille (32) aufweist, die entlang einer Längsachse (A) des Schneidstempels angeordnet ist, wobei der Schneidstempel (3) zwei Schneidabschnitte (34) aufweist, die durch die zentrale vertikale Nut (32) geteilt sind, wobei jeder Schneidabschnitt (34) einen stumpfen Winkel in Bezug auf die Längsachse (A) des Schneidstempels (3) bildet.

2. Vorrichtung zum Erstellen von Blattproben nach Anspruch 1,
wobei der Schneidstempel (3) ein abgeschrägtes unteres Ende (31) aufweist.

3. Vorrichtung zum Erstellen von Blattproben nach Anspruch 1,
wobei das Unterteil (1) Zentriermittel (11, 12) zum Zentrieren der Blattprobe (2) aufweist.

4. Vorrichtung zum Erstellen von Blattproben nach Anspruch 3,
wobei das Zentriermittel eine Vielzahl von Löchern (11) aufweist, in denen von dem Unterteil (1) vorstehende Stifte (12) untergebracht sind.

5. Vorrichtung zum Erstellen von Blattproben nach Anspruch 1,
wobei die Vorrichtung auch ein Drückelement (4) zum Andrücken der Blattprobe (2) gegen das Unterteil (1) aufweist.

6. Vorrichtung zum Erstellen von Blattproben nach den Anspruch 5,
wobei das Drückelement (4) in der zentralen vertikalen Nut (32) des Schneidstempels (3) angeordnet ist.

7. Vorrichtung zum Erstellen von Blattproben nach Anspruch 1,
wobei der Schneidstempel (3) auf einen Pressrahmen (5) montiert ist.

8. Vorrichtung zum Erstellen von Blattproben nach Anspruch 7,
wobei die Vorrichtung ferner ein Drückelement (4) zum Andrücken der Blattprobe (2) gegen das Unterteil (1) aufweist und wobei das Drückelement (4) ebenfalls an dem Pressrahmen (5) montiert ist.

## Revendications

1. Dispositif de préparation d'échantillons de feuille, comprenant une base (1) pour placer sur celle-ci un échantillon de feuille (2) et un poinçon de découpe (3) pour découper des fentes cisaillées ou des encoches pointues dans ledit échantillon de feuille (2), **caractérisé en ce que**
ledit poinçon de découpe (3) comprend une rainure verticale centrale (32) positionnée le long d'un axe longitudinal (A) du poinçon de découpe, dans lequel ledit poinçon de découpe (3) comprend deux parties de découpe (34) séparées par ladite rainure verticale centrale (32), chaque partie de découpe (34) définissant un angle obtus par rapport à l'axe longitudinal (A) du poinçon de découpe (3).

2. Dispositif de préparation d'échantillons de feuille selon la revendication 1, dans lequel ledit poinçon de découpe (3) comprend une extrémité inférieure biseautée (31).

3. Dispositif de préparation d'échantillons de feuille selon la revendication 1, dans lequel la base (1) comprend des moyens de centrage (11 , 12) pour centrer ledit échantillon de feuille (2).

4. Dispositif de préparation d'échantillons de feuille selon la revendication 3, dans lequel lesdits moyens de centrage comprennent une pluralité de trous (11) à l'intérieur desquels sont logés des tiges (12) faisant saillie à partir de la base (1).

5. Dispositif de préparation d'échantillons de feuille selon la revendication 1, dans lequel le dispositif comprend également un élément presseur (4) pour presser l'échantillon de feuille (2) contre la base (1).

6. Dispositif de préparation d'échantillons de feuille selon la revendication 5, dans lequel ledit élément presseur (4) est placé dans ladite rainure verticale centrale (32) du poinçon de découpe (3).

7. Dispositif de préparation d'échantillons de feuille selon la revendication 1, dans lequel ledit poinçon de découpe (3) est monté sur un cadre de pressage (5).

8. Dispositif de préparation d'échantillons de feuille selon la revendication 7, dans lequel le dispositif comprend en outre un élément presseur (4) pour presser l'échantillon de feuille (2) contre la base (1) et dans lequel ledit élément presseur (4) est également monté sur ledit cadre de pressage (5).
